# EUROPEAN PATENT APPLICATION

(11) **EP 4 641 865 A1**
(43) Date of publication of application: **29.10.2025**
(21) Application number: 24172733.8
(22) Date of filing: 26.04.2024
(51) Int. Cl.: H02J 3/32, H02J 3/38

(54) **STARTUP CONTROL OF GENERATOR**

(71) Applicant: Volvo Car Corporation, 405 31 Göteborg (SE)
(72) Inventor: Schöld, Jones, 405 31 Göteborg (SE); Arumugam, Vijay, 42140 Västra Frölunda (SE); Köse, Emir, 405 31 Göteborg (SE); Fotouhi, Ali, 434 51 Kungsbacka (SE)
(74) Representative: Nederlandsch Octrooibureau

(57) **Abstract**

A control unit for controlling an electric power supply device being configured for power supply between an energy storage and a power grid supplying electric power to a connection point, the control unit configured to receive first data indicative of if the energy storage is connected to the electric power supply device, detect that the energy storage is connected to the electric power supply device, after detecting that the energy storage is connected, obtain second data indicative of a frequency and a voltage of an exchanged electric power at the connection point for an observation period, determine, if both the frequency has been maintained within frequency limitations, and the voltage has been maintained within voltage limitations during the observation period, and, provide a startup control signal to the electric power supply device indicating that the energy storage is allowed to exchange electric power with the power grid.

## Description

### TECHNICAL FIELD

The present disclosure relates to a control unit and a method for controlling an electric power supply device, the electric power supply device being configured for power supply between an energy storage and a power grid which supplies electric power to a connection point.

### BACKGROUND OF THE PRESENT DISCLOSURE

Electric power supply devices shall observe the power grid quality for a certain period before allowing power feed-in to the power grid. This shall happen every time the electric power supply device starts up. Typical solar hybrid inverter and battery inverter stays at one place and is always connected to the power grid. But electric vehicle and/or other kind of devices with energy storage can connect and disconnect several times in a day because the customer may use the electric vehicle for transportation. Implementing this requirement in electric vehicles will result in a poor charging experience for customer because every time the customer connects the electric vehicle, it is needed to wait for this function to be performed before allowing charging or discharging. This results in a poor charging experience for customers.

### SUMMARY OF THE PRESENT DISCLOSURE

According to an embodiment, a control unit is provided, the control unit for controlling an electric power supply device, the electric power supply device being configured for power exchange between an energy storage and a power grid which supplies electric power to a connection point, the control unit being configured to receive first data indicative of if the energy storage is connected to the electric power supply device, detect, using the first data, that the energy storage is connected to the electric power supply device, obtain second data indicative of a frequency and a voltage of an exchanged electric power at the connection point for an observation period, determine, using the second data, if both the frequency has been maintained within frequency limitations, and the voltage has been maintained within voltage limitations during the observation period, and provide a startup control signal to the electric power supply device indicating that the energy storage is allowed to exchange electric power with the power grid.

This allows the energy storage to start exchanging electric power with the power grid as soon as the energy storage is connected to the electric power supply if the voltage and frequency have been maintained within the frequency and voltage limitations for the observation period, thereby avoiding waiting time when the energy storage is connected because the observation was already carried out by the electric power supply device which stays connected all the time. To detect, using the first data, that the energy storage is connected to the electric power supply device, the electric power supply device may be continuously
monitor whether the energy storage is plugged-in to the electric power supply device. For instance, as soon as the energy storage is plugged-in to the electric power supply device, certain signals should be received at the electric power supply device through a communication line between the energy storage and the electric power supply device.

According to another embodiment, a method for controlling an electric power supply device is provided, the electric power supply device being configured for power exchange between an energy storage and a power grid which supplies electric power to a connection point, the method comprising receiving first data indicative of if the energy storage is connected to the electric power supply device, detecting, using the first data, that the energy storage is connected to the electric power supply device, determining, using the second data, if both the frequency has been maintained within frequency limitations, and the voltage has been maintained within voltage limitations, for an observation period, and providing a startup control signal to the electric power supply device indicating that the energy storage is allowed to exchange electric power with the power grid.

If the second data indicates that the frequency of the power grid has not been maintained within the frequency limitations for the observation period, the startup control signal may indicate that the energy storage should supply power to the power grid and not draw power from the power grid for a first waiting period, or draw power from the power grid and not supply power to the power grid for a second waiting period. That is, if the second data lindicates that the power grid is in an abnormal state and needs reinforcement (by adding loads or generation of power depending on the frequency of the power grid) to restore the frequency of the power grid. In this situation, the startup control signal for the newly connected energy storage may indicate that the energy storage should supply power to the power grid and not draw power from the power grid, or draw power from the power grid and not supply power to the power grid, until the frequency of the power grid is restored.

In this way, the first waiting period and the second waiting period may be based on a time needed for the power grid to be restored such that the frequency is again within the frequency limitations. For instance, the control unit may be continuously monitoring the power grid and, when the control unit detects that the frequency of the power grid is again within the frequency limitations, the control unit may generate a startup signal indicating that the energy storage is allowed to exchange electric power with the power grid.

In this way, the energy storage will be able to connect and immediately start to help the power grid on restoring the frequency to be within the frequency limitations.

The second data indicative of the frequency and the voltage of the exchanged electric power at the connection point for the observation may be obtained based on a plurality of frequency and voltage measurements of the exchanged power taken during the observation period.

The frequency may have been maintained within the frequency limitations if an average of the plurality of frequency measurements is between a higher frequency threshold and a lower frequency threshold, or if a number of the plurality of measurement are between the higher frequency threshold and the lower frequency threshold.

The voltage may have been maintained within the voltage limitations if an average of the plurality of voltage measurements is between a higher voltage threshold and a lower voltage threshold, or if another number of the plurality of voltage measurements are between the higher voltage threshold and the lower voltage threshold.

If the average of the plurality of frequency measurements and/or at least one of the plurality of frequency measurements is above the higher frequency threshold, the startup control signal indicates that the energy storage should, for the second waiting period, draw power from the power grid and not supply power to the power grid.

By drawing power from the power grid, the energy storage acts as a load to the power grid thereby helping to reducing the power grid frequency.. This allows the energy storage to help restore the frequency at the power grid when said frequency is above the higher frequency threshold.

If the average of the plurality of frequency measurements and/or at least one of the plurality of frequency measurements is below the lower frequency threshold, the startup control signal indicates that the energy storage should, for the first waiting period, supply power to the power grid and not draw power from the power grid.

By supplying power from the energy storage to the power grid, the energy storage unit will help to improve the power grid frequency. This allows the energy storage to help restoring the frequency of the power at the power grid when said frequency is below the lower frequency threshold.

In this way, the power grid have the possibility to reach a stable situation faster, and the energy storage will be allowed to exchange power with the power grid in any convenient way for the energy storage after the power grid situation is again stable.

The plurality of frequency and voltage measurements may have been taken by a measurement device connected to the connection point or by the electric power supply device.

The electric power supply device and/or the measurement device may continuously be taken measurement of frequency and voltage of exchanged power. For instance, the electric power supply device and/or the measurement device may perform a frequency and voltage measurement at every 1 second or at any other suitable rate. If the measurement device is performing the measurements, the measurement device will send those measurements to the electric power supply device. The electric power supply device may store in an internal memory the measured voltage and frequency and, upon detecting that the energy storage is connected to the electric power supply device, may calculate, based on the stored measurements whether the frequency and/or the voltage have been maintained within frequency and/or voltage limitations for an observation period prior to the connection of the energy storage. For instance, if the observation period is of 60 seconds and measurements are taken at every 1 second, the electric power supply device may store the last performed 60 measurements in a memory such that, upon detection of connection of the energy storage, those 60 stored measurements will be used to detect whether the frequency and the voltage are within the required limitations. For instance, the average of the 60 measurements may be calculated and, if said average is within a higher and a lower frequency threshold, the control unit of the electric power supply device will detect that the frequency of exchanged power at the power grid is within the frequency limitations.

Instead of storing the measurements, the electric power supply device may update a status variable stored in the memory. For instance, the electric power supply device may change the status variable based on whether the frequency and/or voltage has been maintained within the frequency and/or voltage limitations.

The electric power supply device may be configured for bidirectional power supply between the energy storage and the power grid and, if both the frequency has been maintained within the frequency limits, and the voltage has been maintained within the voltage limits for the observation period, the startup control signal indicates that the energy storage is allowed to bidirectionally exchange electric power with the power grid.

The first waiting period and the second waiting period may be equal to the time needed by the power grid to restore the frequency within the frequency limitations.

The energy storage may be arranged at an electric vehicle.

The observation period may comprise a period before detecting that the energy storage is connected to the electric power supply device. The electric power supply device may stay connected to the power grid and may monitor the power grid continuously. The startup control signal is sent to the energy storage as soon as the energy storage is connected to the electric power supply device to indicate which action is allowed.

The higher frequency threshold may be greater than the lower frequency threshold and/or the higher voltage threshold may be greater than the lower voltage threshold.

According to another embodiment, an electric vehicle power supply device comprising the control unit is provided.

The higher frequency threshold may be between 65 Hertz's and 45 Hertz's, preferably between 52 Hertz's and 50 Hertz's. However, the higher frequency threshold may be any other suitable value.

The lower frequency threshold may be between 45 Hertz's and 65 Hertz's, preferably between 47 Hertz's and 50 Hertz's. However, the lower frequency threshold may be any other suitable value.

The higher voltage threshold may be between a 100 per cent and a 110 per cent of a nominal value of the voltage. The lower voltage threshold may be between a 50 per cent and a 100 per cent of a voltage nominal value. For instance, for a voltage nominal value of 230 such as in Europe, the higher voltage threshold may be between 265.5 Volts and 230 Volts and/or the lower voltage threshold may be between 230 Volts and 115Volts. However, the lower and/or the higher voltage threshold may be any other suitable value.

The person skilled in the art will understand that the features described above may be combined in any way deemed useful.

### BRIEF DESCRIPTION OF THE DRAWINGS

The present disclosure will now be described in further detail with reference to the drawings that shows embodiments of the present disclosure:
FIG. 1 is a schematic of a system for charging and/or discharging an energy storage according to at least one example of the disclosure.
FIG. 2 Is a flow chart of a method for charging and/or discharging an energy storage according to at least one example of the disclosure.
FIG. 3 is a schematic of a system for an electric power supply device comprising the control unit according to an example of the disclosure.

### DETAILED DESCRIPTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The term "vehicle" also includes electric vehicle (EV) powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

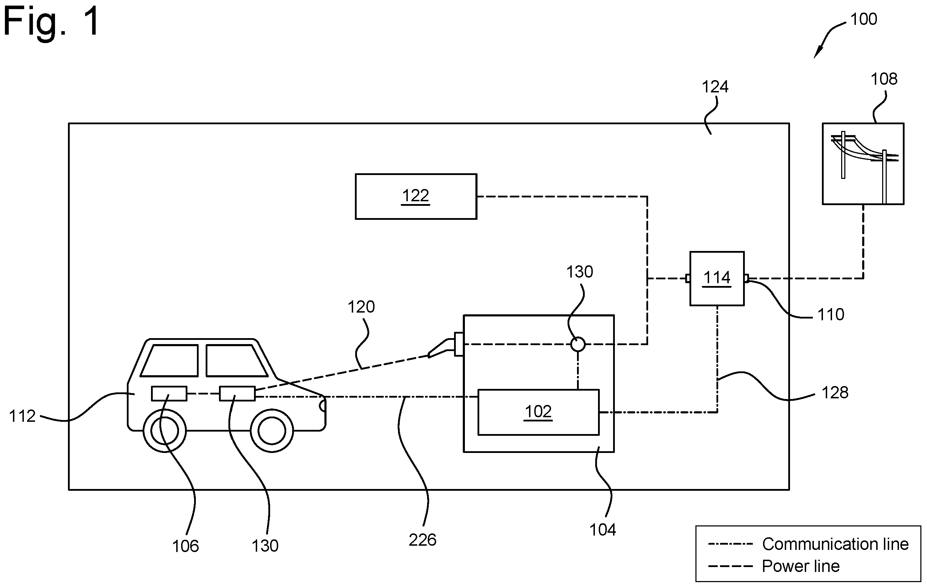

FIG. 1 is a schematic of a system 100 for charging an energy storage 106 according to at least one example of the disclosure.

The system 100 of FIG. 1 shows an electric vehicle 112 comprising an energy storage 106. The system 100 of FIG. 1 also shows an electric power supply device 104 connected to the power grid 108 via a connection point 110. The power grid 108 can be any kind of power grid configured to supply power to one or more loads or generators. For instance, the power grid 108 may be connected at connection point 110 of a house 124 and the house 124 may comprise the electric power supply device 104 and other loads and/or generators 122 belonging to the house 124 such that power exchange in both directions between the power grid 108 and house 124 can take place.

The energy storage 106 can be connected to and disconnected from the electric power supply device 104 via a power cable 120. In this way, when the energy storage 106 is connected to the electric power supply device 104, the energy storage 106 can supply power to the power grid 108 and can consume power from the power grid 108.

The electric vehicle 112 may comprise a Direct Current (DC) to Alternate Current (AC) (and AC to DC) converter, for instance as part of the power board measuring circuit 130. In this way, the electric power supply device 104 may act as a switch and allows the power to passthrough it in both directions.

The energy storage 106 is not allowed to startup when the power grid 108 is in disturbed state (meaning that frequency and voltage are not within frequency and voltage limitations imposed by the grid power supplier), this is to ensure the safety of the power grid 108 and avoid negative consequence in the power grid 108. With prior agreement with power system system operators,the control unit 102 will allow the energy storage 106 to charge or discharge depending on the situation of the power grid 108 to support the power grid 108 in recovery. For this, the control unit 102 needs information about voltage and frequency measurements of the exchanged power at the connection point 110 of the power grid 108. Said voltage and frequency can be measured internally inside the electric power supply device 104 by the power board measuring circuit 130 or can be read from the measurement device 114.

The electric power supply device 104 comprises the control unit 102. The control unit 102 is configured to receive first data indicative of indicative of whether the energy storage 106 is connected to the electric power supply device 104. The control unit 102 is further configured to detect, using the first data, that the energy storage 106 is connected to the electric power supply device 104.

For instance, the control unit 102 may be connected through communication line 226 with the energy storage 106 such that the control unit 102 may received a signal via communication line 226 as soon as the energy storage 106 is connected to the electric power supply device 104.

After detecting that the energy storage 106 has just been connected to the electric power supply device 104, the control unit 102 may obtain second data indicative of a frequency and a voltage of an exchanged electric power at the connection point 110. The control unit 102 may determine, using said second data, if the frequency has been maintained within frequency limitations and if the voltage has been maintained within voltage limitations during the observation period.

The second data indicative of the frequency and the voltage of the exchanged electric power at the connection point for the observation may be obtained based on a plurality of frequency and voltage measurements of the exchanged power taken during the observation period. The control unit may be continuously monitoring the power grid. For instance, the electric power supply device and/or the measurement device may continuously be taken measurement of frequency and voltage of exchanged power. The electric power supply device may store in an internal memory the measured voltage and frequency and, upon detecting that the energy storage is connected to the electric power supply device, may calculate, based on the stored measurements whether the frequency and/or the voltage have been maintained within frequency and/or voltage limitations for an observation period prior to the connection of the energy storage.

If the control unit 102 determines that both the frequency has been maintained within the frequency limitations, and the voltage has been maintained within voltage limitations for the observation period, the control unit 102 will provide a startup control signal to the electric power supply device 104 indicating that the energy storage 106 is allowed to exchange electric power with the power grid 108. The electric power supply device 104 may provide the startup signal to the electric vehicle 112 though the communication lines 226. Then the energy storage 106 may start charging power from the power grid 108 or start discharging power to the power grid 108.

If the second data indicates that the frequency of the power grid 108 has not been maintained within the frequency limitations for the observation period, the control unit 102 will generate a startup control signal indicating that the energy storage 106 should supply power to the power grid 108 and not draw power from the power grid 108 for a first waiting period, or draw power from the power grid 108 and not supply power to the power grid 108 for a second waiting period.

The control unit 102 may obtained the second data indicative of the frequency and the voltage of the exchanged electric power at the connection point 110 for the observation period based on a plurality of frequency and voltage measurements of the exchanged power taken during the observation period. The plurality of frequency and voltage measurements may be taken by the measurement device 114 which is connected to the connection point 110 and transmitted to the electric power supply device 104 via communication line 128. Alternatively, the electric power supply device 104 may be taken the plurality of frequency and voltage measurements using sensor 130.

The control unit 102 may detect that the frequency has been maintained within the frequency limitations by determining an average of the plurality of frequency measurements taken during an observation period prior to connecting the energy storage to the electric power supply device 104. If the calculated average is between a higher frequency threshold and a lower frequency threshold, the control unit 102 may decide that the frequency has been maintained within the frequency limitations.

Alternatively, the control unit 102 may detect that the frequency has been maintained within the frequency limitations by determining that a number of the plurality of measurement taken during the observation period are between a higher frequency threshold and a lower frequency threshold.

In the same way, if an average of the plurality of voltage measurements is between a higher voltage threshold and a lower voltage threshold, or if another number of the plurality of voltage measurements are between the higher voltage threshold and the lower voltage threshold, the control unit 102 may determine that the voltage has been maintained with the required voltage limitations.

If the average of the plurality of frequency measurements and/or at least one of the plurality of frequency measurements is above the higher frequency threshold, the control unit 102 may generate a startup control signal indicating that the energy storage 106 should, for the second waiting period, draw power from the power grid 108 and not supply power to the power grid 108.

In a similar way, if the average of the plurality of frequency measurements and/or at least one of the plurality of frequency measurements is below the lower frequency threshold, the control unit 102 may generate a the startup control signal indicating that the energy storage 106 should, for the first waiting period, supply power to the power grid 108 and not draw power from the power grid 108.

In this way, the control unit 102 of the electric power supply device 104 decides the allowed operations of the energy storage 106 of the electric vehicle 112 based on the second data. The electric power supply device 104 may communicate the allowed operations to the electric vehicle 112 through communication lines 226 and using a communication protocol such as ISO15118-2 or ISO15118-20 or IEC61851 or DIN 70121. However, any other communication standard may be used to communicate the possible/allowed operation such as wireless, Bluetooth etc...

As it has been explained, the control unit 102, based on the received second data indicative of a frequency and a voltage of an exchanged electric power at the connection point 110 may determine the following operations for the electric vehicle 112.

If the control unit 102 determines that the power grid 108 is operating under normal conditions, meaning that both the voltage and frequency of an exchanged electric power at the connection point 110 are within allowed limitations, the control unit 102 shall provide a startup control signal to the electric power supply device 104 indicating that the energy storage 106 is allowed to bidirectionally exchange electric power with the power grid 108. In this way, the electric vehicle 112 is allowed to operate as desired immediately after plugin to the electric power supply device 104 if voltage and frequency were within the permissible range for the past observation period (i.e., charge or discharge allowed).

If the control unit 102 determines that the power grid 108 is operating under disturbed conditions, meaning the frequency of an exchanged electric power at the connection point 110 is not within the allowed limit, the control unit 102 shall provide a startup control signal to the electric power supply device 104 indicating that the following:

-the control unit 102 shall provide a startup control signal allowing the electric vehicle 112 to charge the energy storage 106 immediately if the frequency is on the higher side of the nominal value (and the voltage is within the permissible range) which will help the power grid 108 to bring the frequency down by adding load to the power grid 102. That is, if the first data indicates that the frequency of the power grid 108 is above the higher frequency threshold, the startup control signal indicates that the energy storage 106 should, for the second waiting period, draw power from the power grid 108 and not supply power to the power grid 108, allowing charging the energy storage 106 of the electric vehicle 112, but delaying discharging the energy storage 106.

- the control unit 102 shall provide a startup control signal allowing the electric vehicle 112 to discharge the energy storage 106 immediately when the frequency is on the lower side of the nominal value (and the voltage is within the permissible range) which will help the power grid 108 to increase frequency by adding generation to the power grid 108. That is, if the first data indicates that the frequency of the power grid 108 is below the lower frequency threshold, the startup control signal indicates that the energy storage 106 should, for the first waiting period, supply power to the power grid 108 and not draw power from the power grid 108, allowing discharging the energy storage 106 of the electric vehicle 112, but delaying charging the energy storage 106.

The electric power supply device 104 may continuously monitor the voltage and frequency of the exchanged electric power at the connection point 110 from the moment that the electric power supply device 104 is powered up, even when the electric vehicle 112 is not connected.

The control unit may consider other disturbed conditions of the power grid 108 such that the control unit 102 shall provide a startup control signal to the electric power supply device 104 based on the below table I:

**Table I**

| Frequency | Voltage | Allowed function |
|---|---|---|
| Within Normal range | Within Normal range | Allow charge or discharge as desired |
| Grid Frequency > Upper threshold | Within Normal range | Allow charge |
| Grid Frequency < lower threshold | Within Normal range | Allow discharge |
| Grid Frequency > Upper threshold | Grid Voltage > Upper threshold | Allow charge |
| Grid Frequency < lower threshold | Grid Voltage > Upper threshold | Do not allow, continue monitoring |
| Grid Frequency > Upper threshold | Grid Voltage < lower threshold | Do not allow, continue monitoring |
| Grid Frequency < lower threshold | Grid Voltage < lower threshold | Allow discharge |
| Within Normal range | Grid Voltage > Upper threshold | Allow charge |
| Within Normal range | Grid Voltage < lower threshold | Allow discharge |
| Outside Normal range | Outside Normal range | Do not allow, continue monitoring |

The firs column of table I corresponds to the frequency of the power grid 108, the second column to the voltage of the power grid 108 and the third column shows the operation allowed by the generated startup control signal that corresponds to the combination of frequency and voltage of the corresponding row. For instance, if both the frequency and the voltage of the power grid 108 are respectively above the higher frequency threshold and the higher voltage threshold, the control unit 102 may generate a startup control signal allowing the energy storage 106 to charge from the power grid 108 but not to discharge. However, if the frequency of the power grid 108 is below the lower frequency threshold and the voltage of the power grid 108 is above the higher voltage threshold, the control unit 102 may generate a startup control signal not allowing the energy storage 106 to charge power from the power grid 108 neither discharge power from the power grid 108.

The below table II provides some examples of ranges and possible default setting for the observation period, the higher frequency threshold, the lower frequency threshold, the higher voltage threshold, and the lower voltage threshold. However, these ranges and values are not limiting and any other suitable values and ranges may be used.

**Table II**

| Parameter | Range | Default setting |
|---|---|---|
| Lower frequency threshold | 47,0 Hertz (HZ) - 50,0 Hz | 49,5 Hz |
| Higher frequency threshold | 50,0 Hz - 52,0 Hz | 50,1 Hz |
| Lower voltage threshold | 50% - 100% Un | 85% Un |
| Higher voltage threshold | 100% - 120% | 110% Un |
| Observation period | 10 seconds - 600 seconds | 60 seconds |

The frequency range, the voltage range, the observation time shall be adjustable in the range according to table I, second column. If no settings are specified by the operator of the power grid, the default settings for connection or starting to generate electrical power due to normal operational startup or activity are according to table I, third column. Un refers to Nominal Voltage, for EU, the nominal voltage is 230 Vac. i.w., 230 V refers to 100%Un.

The electric vehicle 112 of FIG. 1 comprises the energy storage 106 and a vehicle control unit 130 configured to, when the electric vehicle 112 has just been connected to the electric power supply device 104, receive the startup control signal generated by a control unit 102 of the electric power supply device 104 and to control the energy storage 106 based on the startup control signal. The startup control signal may indicate to the energy storage 106 one of starting exchange of electric power in any direction with the power grid, supply power to the power grid and not draw power from the power grid for a first waiting period or draw power from the power grid and not supply power to the power grid for a second waiting period. The first and second waiting times correspond to the amount of time needed by the power grid to restore the frequency to be within the frequency limitations.

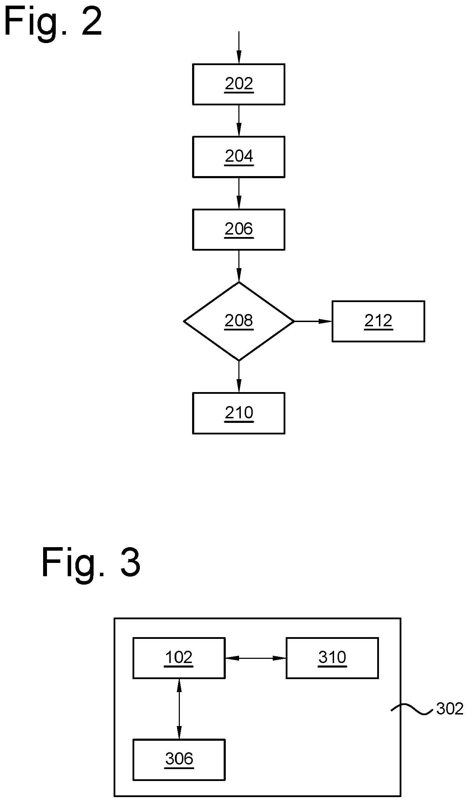

FIG. 2 shows a flowchart of a method for controlling an electric power supply device 104, the electric power supply device 104 being configured for power supply between an energy storage 106 and a power grid 108 which supplies electric power to a connection point 110.

In step 202, the method of FIG. 2 receives first data indicative of if the energy storage 106 is connected to the electric power supply device 104. In step 204, the method of FIG. 2 detects, using the first data, that the energy storage 106 is connected to the electric power supply device 104.

After detecting, in step 204, that the energy storage 106 is connected to the electric power supply device 104, the method proceeds to step 206 and obtains second data indicative of a frequency and a voltage of an exchanged electric power at the connection point 110 for an observation period.

In step 208, the method determines, using the second data, if both the frequency has been maintained within frequency limitations, and the voltage has been maintained within voltage limitations, for an observation period.

The second data indicative of the frequency and the voltage of the exchanged electric power at the connection point for the observation may be obtained based on a plurality of frequency and voltage measurements of the exchanged power taken during the observation period. The method of FIG. 2 may be, continuously monitoring the power grid. For instance, the method of FIG. 2 may be continuously measuring or continuously receiving measurements of frequency and/or voltage of exchanged power. The measured voltage and frequency may be stored in an internal memory and, upon detecting that the energy storage is connected to the electric power supply device, the method in step 208 may determine, based on the stored measurements, whether the frequency and/or the voltage have been maintained within frequency and/or voltage limitations for an observation period prior to the connection of the energy storage.

After determining in step 208 that both the frequency has been maintained within the frequency limitations, and the voltage has been maintained within the voltage limitations for the observation period, the method proceeds to step 210 and provides a startup control signal to the electric power supply device 104 indicating that the energy storage 106 is allowed to exchange electric power with the power grid 108.

If the method determines in step 208 that the frequency has not been maintained within the frequency limitations, the method proceeds to step 212 and generates the startup control signal indicating that the energy storage 106 should supply power to the power grid 108 and not draw power from the power grid 108 for a first waiting period, or draw power from the power grid 108 and not supply power to the power grid 108 for a second waiting period.

FIG. 3 illustrates a block diagram of an apparatus 302 for an electric power supply device 104 comprising the control unit 102 configured to perform the method of FIG. 2. The apparatus 302 may comprise a control unit 102, a memory 306, and a communication unit 310. The control unit 102 may comprise a Central Processing Unit, CPU, which is connected to the memory 306, the communication unit 310.

The memory 306 may comprise any suitable known memory devices to store data and/or instructions to be run on the control unit 102, and may include any known type of volatile and nonvolatile memory equipment, RAM and ROM types of memories, etc. The memory may be used to store the plurality of measurements to be used to determine whether the frequency and/or voltage of the power grid is within the frequency and/or voltage limitations.

The communication unit 310 is configured to transmit signals to and receive signals from equipment outside the control unit 102 such as the electric vehicle 112 or the measurement device 114. Any known and suitable transceiver equipment can be used for that purpose using any known or still to be developed (standard) communication technique including 2G, 3G, 4G, 5G, Wifi, Bluetooth, NFC, etc. To that end the communication unit 310 may be connected to a network and an antenna.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

## Claims

1. A control unit (102) for controlling an electric power supply device (104), the electric power supply device (104) being configured for power supply between an energy storage (106) and a power grid (108) which supplies electric power to a connection point (110), the control unit (102) being configured to:
• receive first data indicative of if the energy storage (106) is connected to the electric power supply device (104);
• detect, using the first data, that the energy storage is connected to the electric power supply device (104);
• obtain second data indicative of a frequency and a voltage of an exchanged electric power at the connection point (110) for an observation period;
• determine, using the second data, if both the frequency has been maintained within frequency limitations, and the voltage has been maintained within voltage limitations during the observation period; and
• provide a startup control signal to the electric power supply device (104) indicating that the energy storage (106) is allowed to exchange electric power with the power grid (108).

2. A method for controlling an electric power supply device (104), the electric power supply device (104) being configured for power supply between an energy storage (106) and a power grid (108) which supplies electric power to a connection point (110), the method comprising:
• receiving (202) first data indicative of if the energy storage (106) is connected to the electric power supply device (104);
• detecting (204), using the first data, that the energy storage is connected to the electric power supply device (104);
• obtaining (206) second data indicative of a frequency and a voltage of an exchanged electric power at the connection point (110) for an observation period;
• determining (208), using the second data, if both the frequency has been maintained within frequency limitations, and the voltage has been maintained within voltage limitations, for an observation period; and
• providing (210) a startup control signal to the electric power supply device (104) indicating that the energy storage (106) is allowed to exchange electric power with the power grid (108).

3. The control unit (102) according to claim 1 or the method according to claim 2, wherein, if the second data indicates that the frequency of the power grid (108) has not been maintained within the frequency limitations for the observation period, the startup control signal indicates that the energy storage (106) should supply power to the power grid (108) and not draw power from the power grid (108) for a first waiting period, or draw power from the power grid (108) and not supply power to the power grid (108) for a second waiting period.

4. The control unit (102) or the method according to claim 3, wherein the second data indicative of the frequency and the voltage of the exchanged electric power at the connection point (110) for the observation period is obtained based on a plurality of frequency and voltage measurements of the exchanged power taken during the observation period.

5. The control unit (102) or the method according to claim 4, wherein the frequency has been maintained within the frequency limitations if an average of the plurality of frequency measurements is between a higher frequency threshold and a lower frequency threshold, or if a number of the plurality of measurement are between the higher frequency threshold and the lower frequency threshold, and/or wherein the voltage has been maintained within the voltage limitations if an average of the plurality of voltage measurements is between a higher voltage threshold and a lower voltage threshold, or if another number of the plurality of voltage measurements are between the higher voltage threshold and the lower voltage threshold

6. The control unit (102) or the method according to claim 5, wherein, if the average of the plurality of frequency measurements and/or at least one of the plurality of frequency measurements is above the higher frequency threshold, the startup control signal indicates that the energy storage (106) should, for the second waiting period, draw power from the power grid (108) and not supply power to the power grid (108).

7. The control unit (102) or the method according to claim 5, wherein, if the average of the plurality of frequency measurements and/or at least one of the plurality of frequency measurements is below the lower frequency threshold, the startup control signal indicates that the energy storage (106) should, for the first waiting period, supply power to the power grid (108) and not draw power from the power grid (108).

8. The control unit (102) or the method according claim 4, wherein the plurality of frequency and voltage measurements are taken by a measurement device (114) connected to the connection point (110) or by the electric power supply device (104).

9. The control unit (102) or the method according to any of the previous claims, wherein the electric power supply device (104) is configured for bidirectional power supply between the energy storage (106) and the power grid (108) and, if both the frequency has been maintained within the frequency limitations, and the voltage has been maintained within the voltage limitations for the observation period, the startup control signal indicates that the energy storage (106) is allowed to bidirectionally exchange electric power with the power grid (108).

10. The control unit (102) or the method according to any of claims 3-9, wherein the first waiting period and the second waiting period are based on an amount of time needed by the power grid to restore the frequency within the frequency limitations.

11. The control unit (102) or the method according to any of the previous claims, wherein the energy storage (106) is arranged at an electric vehicle (112).

12. The control unit (102) or the method according to any of the previous claims, wherein the observation period comprises a period before detecting that the energy storage (106) is connected to the electric power supply device (104).

13. The control unit (102) or the method according to claim 5, wherein the higher frequency threshold is greater than the lower frequency threshold and/or the higher voltage threshold is greater than the lower voltage threshold.

14. An electric vehicle power supply device (104) comprising the control unit (102) according to any of claims 1 or 3-13.
